# EUROPEAN PATENT APPLICATION

(11) **EP 2 688 187 A2**
(43) Date of publication of application: **22.01.2014**
(21) Application number: 13175666.0
(22) Date of filing: 09.07.2013
(51) Int. Cl.: H02K 11/00

(54) **Motor unit**

(30) Priority: 17.07.2012 JP 2012158756
(71) Applicant: JTEKT CORPORATION, Osaka-shi Osaka 542-8502 (JP)
(72) Inventor: NAKAI, Motoo, Osaka-shi, Osaka 542-8502 (JP); WAKITA, Yasuyuki, Osaka-shi, Osaka 542-8502 (JP)
(74) Representative: Winter, Brandl, Fürniss, Hübner, Röss, Kaiser, Polte - Partnerschaft

(57) **Abstract**

A motor unit (1) includes an electric motor (1A) that has a motor bracket (60) that is fixed to an end portion of a motor housing (40) that houses a rotor (10) and a stator (20); a gear housing (110) fixed to the motor bracket (60); and a circuit board (70) that controls driving of the electric motor (1A). The circuit board (70) is wrapped on an outer face (113B) of a side wall (113) of the gear housing (110).

## Description

### BACKGROUND OF THE INVENTION

### 1. Field of the Invention

The invention relates to a motor unit including a circuit board that controls the driving of an electric motor. 2. Discussion of Background

Japanese Patent Application Publication No. 2007-288929 (JP 2007-288929 A) describes a motor unit that includes a motor housing, a motor bracket, and one flat plate circuit board. The motor housing houses a rotor and a stator. The motor bracket is fixed to the motor housing. The circuit board is attached to a bottom wall of the motor bracket. Multiple circuit elements are attached to a main surface of the circuit board.

In the foregoing motor unit, all the circuit elements are attached to the main surface of the circuit board. Therefore, reducing the size of the circuit board in planer directions is difficult.

### SUMMARY OF THE INVENTION

The invention provides a motor unit configured such that the size of a circuit board in the radial direction is made smaller.

According to a feature of an example of the invention, there is provided a motor unit, including: an electric motor having a motor housing that houses a rotor and a stator, and a motor bracket that is fixed to an end portion of the motor housing in an axial direction of the rotor; a board support member located on an opposite side of the motor bracket from the motor housing in the axial direction; and a circuit board that controls driving of the electric motor, and that is wrapped on an outer face of the board support member.

### BRIEF DESCRIPTION OF THE DRAWINGS

The foregoing and further objects, features and advantages of the invention will become apparent from the following description of example embodiments with reference to the accompanying drawings, wherein like numerals are used to represent like elements and wherein:
FIG. 1 is a sectional view of a motor unit according to an embodiment of the invention, showing the sectional structure of the motor unit taken along a plane extending in the axial direction of the motor unit;
FIG. 2A is a sectional view taken along the line Z1A-Z1A in FIG. 1;
FIG. 2B is a sectional view taken along the line Z1B-Z1B in FIG. 1;
FIG. 3 is a development diagram of a circuit board in the embodiment, showing the development structure of the circuit board from which a resin cover portion is omitted;
FIG. 4 is a sectional view of a control device according to the embodiment, taken along the line Z3-Z3 in FIG. 3; and
FIG. 5 is a sectional view of a motor unit according to another embodiment of the invention, showing part of the sectional structure of the motor unit taken along a plane extending in the axial direction of the motor unit.

### DETAILED DESCRIPTION OF EMBODIMENTS

Hereinafter, embodiments of the invention will be described with reference to the accompanying drawings.

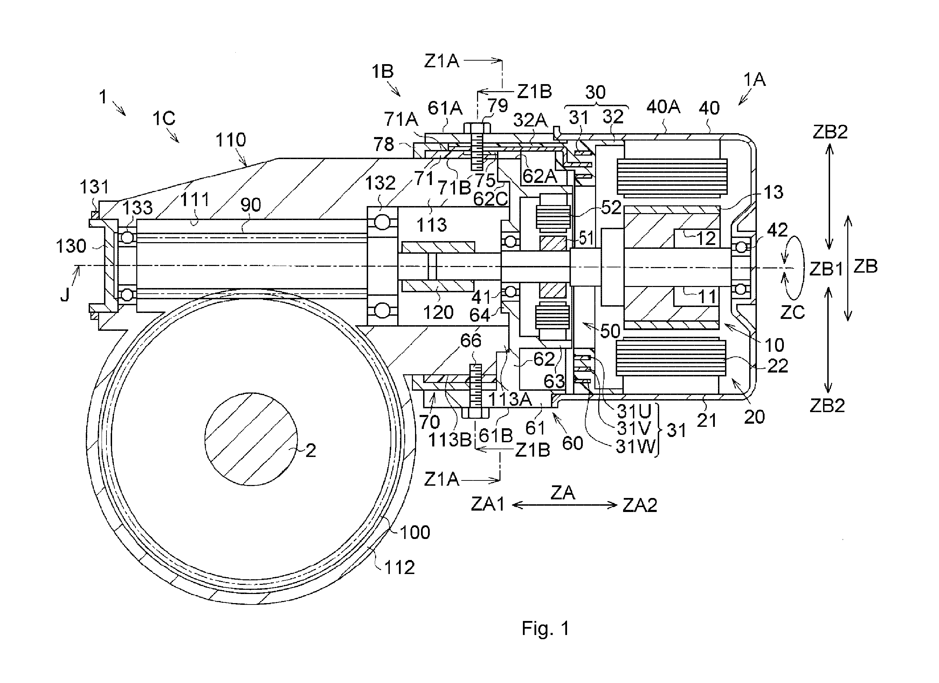

The structure of a motor unit 1 according to an embodiment of the invention will be described with reference to FIG. 1. The motor unit 1 includes an electric motor 1A, a control device 1B, and a speed reducer 1C. The control device 1B is located between the electric motor 1A and the speed reducer 1C. The control device 1B controls the operation of the electric motor 1A. The speed reducer 1C reduces the speed of rotation received from an output shaft 11 of the electric motor 1A, and transfers rotary torque of the output shaft 11 to a steering shaft 2.

The electric motor 1A includes a rotor 10, a stator 20, a bus bar 30, a motor housing 40, bearings 41, 42, a resolver 50 and a motor bracket 60. The control device 1B includes a circuit board 70 and a gear housing 110. The speed reducer 1C includes a worm shaft 90, a worm wheel 100, a gear housing 110, a cover member 130, a locknut 131, and bearings 132, 133. The gear housing 110 serves as both a component of the control device 1B and a component of the speed reducer 1C. Note that, the gear housing 110 may function as "board support member".

Directions related to the motor unit 1 will be defined as follows.
(A) The directions along the central axis of the rotor 10 (hereinafter, referred to as "central axis J") will be referred to as "axial directions ZA". The directions orthogonal to the axial directions ZA will be referred to as "radial directions ZB". The directions in which the rotor 10 rotates will be referred to as "circumferential directions ZC".
(B) Among the axial directions ZA, the direction along which the electric motor 1A, the control device 1B, and the speed reducer 1C are arranged in this order will be referred to as "upward direction ZA1". On the other hand, among the axial directions ZA, the direction along which the speed reducer 1C, the control device 1B, and the electric motor 1A are arranged in this order will be referred to as "downward direction ZA2".
(C) Among the radial directions ZB, directions toward the central axis J will be referred to as "radially inward directions ZB1". On the other hand, among the radial directions ZB, directions away from the central axis J will be referred to as "radially outward directions ZB2".

The rotor 10 includes the output shaft 11, a rotor core 12, and permanent magnets 13. The rotor core 12 is press-fitted onto the output shaft 11. The permanent magnets 13 are fixed to an outer peripheral face of the rotor core 12. The permanent magnets 13 have ten magnetic poles arranged in the circumferential directions ZC.

The stator 20 has a stator core 21 and a field portion 22. Upon reception of current from an electric power supply (not shown), the stator 20 forms a magnetic field that causes the rotor 10 to generate torque. The stator core 21 is press-fitted to an inner peripheral face of the motor housing 40. In the field portion 22, a concentrated winding is formed by winding wires at the stator core 21. The field portion 22 has four U-phase coils, four V-phase coils, and four W-phase coils.

The bus bar 30 has a copper plate 31 and a support member 32. The bus bar 30 is located above the stator core 21 in the upward direction ZA1. The bus bar 30 electrically connects the stator 20 and the circuit board 70 to each other.

The copper plate 31 has a U-phase copper plate 31U, a V-phase copper plate 31V and a W-phase copper plate 31W. A coil end portion of each U-phase coil is connected to the U-phase copper plate 31U. A coil end portion of each V-phase coil is connected to the V-phase copper plate 31V. A coil end portion of each W-phase coil is connected to the W-phase copper plate 31W. End portions of the U-phase copper plate 31U, the V-phase copper plate 31V, and the W-phase copper plate 31W extend in the upward direction ZA1, and are connected to the circuit board 70.

The support member 32 supports the copper plate 31. The support member 32 is attached at its lower end portion to an outer peripheral portion of the stator core 21. The support member 32 has a copper plate support portion 32A that supports the end portions of the U-phase copper plate 31U, the V-phase copper plate 31V, and the W-phase copper plate 31W. The copper plate support portion 32A contact the end portions of the U-phase copper plate 31U, the V-phase copper plate 31V, and the W-phase copper plate 31W, and extend in the upward direction ZA1. The copper plate support portion 32A, together with the end portions of the U-phase copper plate 31U, the V-phase copper plate 31V, and the W-phase copper plate 31W, are inserted into a bus bar through-hole 62A of the motor bracket 60.

The motor housing 40 has a cylindrical shape that is closed in the downward direction ZA2 and that is open in the upward direction ZA1. The motor housing 40 houses a portion of the rotor 10, the stator 20, the bus bar 30 and the bearing 42. A lower end portion of the motor housing 40 supports the bearing 42.

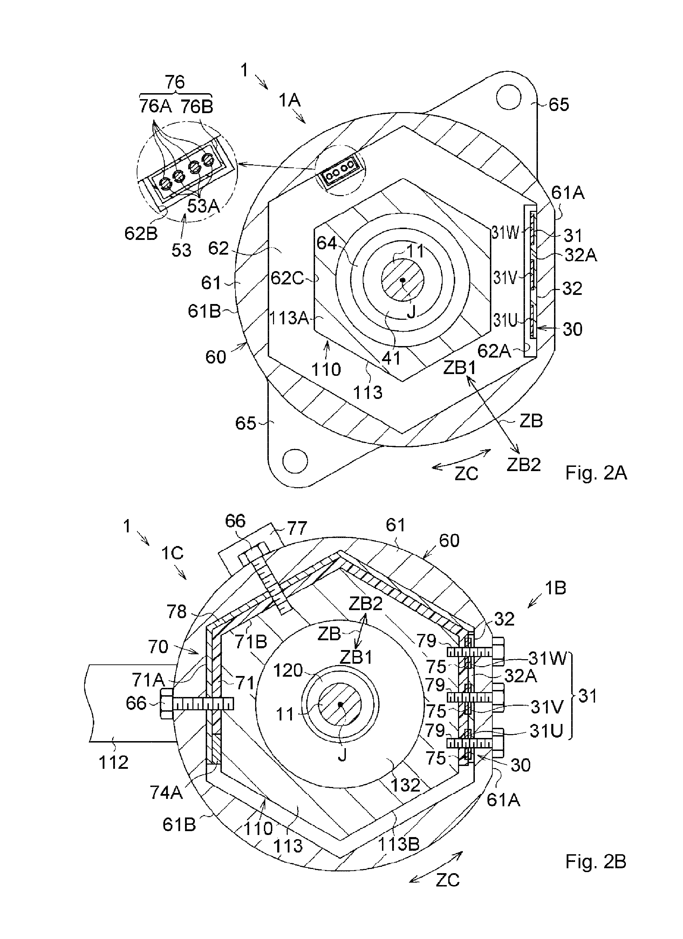

The resolver 50 is located above the bus bar 30 in the upward direction ZA1, and inward of the bus bar 30 in the inward directions ZB1. The resolver 50 outputs, to the circuit board 70, a voltage signal corresponding to the rotational position of the rotor 10. The resolver 50 has a resolver rotor 51, a resolver stator 52, and a circuit connection member 53 (see FIG. 2A). The resolver 50 is configured as a variable reluctance resolver.

The resolver rotor 51 is press-fitted onto the output shaft 11. The resolver stator 52 is press-fitted to a resolver support portion 63. The circuit connection member 53 has a terminal block (not shown) and a plurality of connection terminals 53A (see FIG. 2A). The circuit connection member 53 electrically connects the resolver stator 52 and the circuit board 70 to each other. The terminal block is protruded from the resolver stator 52 in the radial directions ZB. The connection terminals 53A extend in the upward direction ZA1 from the terminal block.

The motor bracket 60 has a side wall 61, a bottom wall 62, a resolver support portion 63, a bearing support portion 64, and attachment portions 65 (see FIG. 2A). The bearing support portion 64 of the motor bracket 60 supports the bearing 41.

The side wall 61 is fixed to an upper end portion of the motor housing 40. The side wall 61 has a generally cylindrical outer peripheral face 61B, and an inner peripheral face that is hexagonal in a plan view. The side wall 61 has a flat surface portion 61A that forms a portion of the outer peripheral face 61B. The flat surface portion 61A is parallel to a portion of the hexagonal inner peripheral face of the side wall 61, the portion being on the side opposite to the flat surface portion 61A (see FIG. 2A).

The bottom wall 62 closes the end of the motor housing 40 in the upward direction ZA1. The bottom wall 62 has the bus bar through-hole 62A, a resolver through-hole 62B, and a first fitting portion 62C. The first fitting portion 62C is located inward of the bus bar through-hole 62A and the resolver through-hole 62B in the radially inward directions ZB1. An inner face of the first fitting portion 62C has a hexagonal shape in a plan view. The resolver support portion 63 extends in the downward direction ZA2 from the bottom wall 62. The bearing support portion 64 extends in the upward direction ZA1 from the bottom wall 62.

The worm shaft 90 rotates together with the output shaft 11. The worm shaft 90 meshes with the worm wheel 100. A lower end portion of the worm shaft 90 is fixed to a coupling 120. The worm shaft 90 is connected to the output shaft 11 via the coupling 120.

The worm wheel 100 is fixed to the steering shaft 2. The worm wheel 100 transfers the rotation of the worm shaft 90 to the steering shaft 2. The gear housing 110 is made of a metal material. The gear housing 110 has a shaft housing portion 111, a wheel housing portion 112, and a side wall 113. The gear housing 110 has a structure in which the cover member 130, the locknut 131, and the bearings 132, 133 are attached to the shaft housing portion 111.

The shaft housing portion 111 houses the worm shaft 90. An end portion of the shaft housing portion 111 in the downward direction ZA2 supports the bearing 132, and an upper end portion of the shaft housing portion 111 supports the bearing 133. The wheel housing portion 112 houses the worm wheel 100 and a portion of the steering shaft 2. The side wall 113 is located at a lower end portion of the gear housing 110. The side wall 113 has an outer face 113B that is hexagonal in a bottom view. A lower end portion of the side wall 113 has a second fitting portion 113A. An outer face of the second fitting portion 113A is hexagonal in a bottom view.

The circuit board 70 is wrapped on the outer face 113B of the side wall 113. The circuit board 70 has a hexagonal shape in a plan view (see FIG. 2B). The circuit board 70 has a circuit board main body 71, three bus bar connection terminals 75, and a resin cover portion 78. The bus bar connection terminals 75 are attached to the circuit board main body 71. The resin cover portion 78 covers the circuit board main body 71 from a main surface 71A side of the circuit board main body 71.

The cover member 130 is fixed to an upper end portion of the shaft housing portion 111. The locknut 131 is attached to the cover member 130. The locknut 131 restrains the cover member 130 from becoming loose relative to the gear housing 110.

With reference to FIG. 1, FIG. 2A and FIG. 2B, the structure of the circuit board 70 and its surroundings will be described in detail. As shown in FIG. 1, the side wall 113 of the gear housing 110 is inserted into a space defined by the side wall 61 of the motor bracket 60. That is, the side wall 113 overlaps with the side wall 61 in the radial directions ZB. The side wall 113 is located inward of the outer peripheral face 40A of the motor housing 40 and the outer peripheral face 61B of the side wall 61 of the motor bracket 60 in the inward directions ZB1. Furthermore, the circuit board 70 overlaps with the side wall 61 in the radial directions ZB, and faces the inner face of the side wall 61. Furthermore, as shown in FIG. 2A, the second fitting portion 113A of the gear housing 110 is fitted to the first fitting portion 62C of the motor bracket 60. The side wall 113 is fixed to the side wall 61 with two bolts 66 (see FIG. 2B).

As shown in FIG. 2B, the circuit board 70 is located between the side wall 113 and the side wall 61 in the radial directions ZB. An outer face of the resin cover portion 78 contacts the inner face of the side wall 61. The circuit board 70 has a structure in which a portion of the circuit board 70, which corresponds to the bus bar connection terminals 75, is not covered with the resin cover portion 78. That is, the circuit board 70 has a structure in which the bus bar connection terminals 75 are exposed on the outside of the circuit board 70.

The U-phase copper plate 31U, the V-phase copper plate 31V, the W-phase copper plate 31W and the copper plate support portion 32A of the bus bar 30 are located in the bus bar through-hole 62A (see FIG. 2A), at positions between the side wall 61 and the bus bar connection terminals 75 in the radial directions ZB. The U-phase copper plate 31U, the V-phase copper plate 31V, and the W-phase copper plate 31W face the bus bar connection terminals 75 in the radial directions ZB. The U-phase copper plate 31U, the V-phase copper plate 31V, and the W-phase copper plate 31W are fixed to the bus bar connection terminals 75 with three bolts 79. The gear housing 110 and the motor bracket 60 are fixed to each other with the bolts 66 at two locations in the circumferential directions ZC. Note that, the surfaces of the bolts 79 are coated so as to provide electrical insulation.

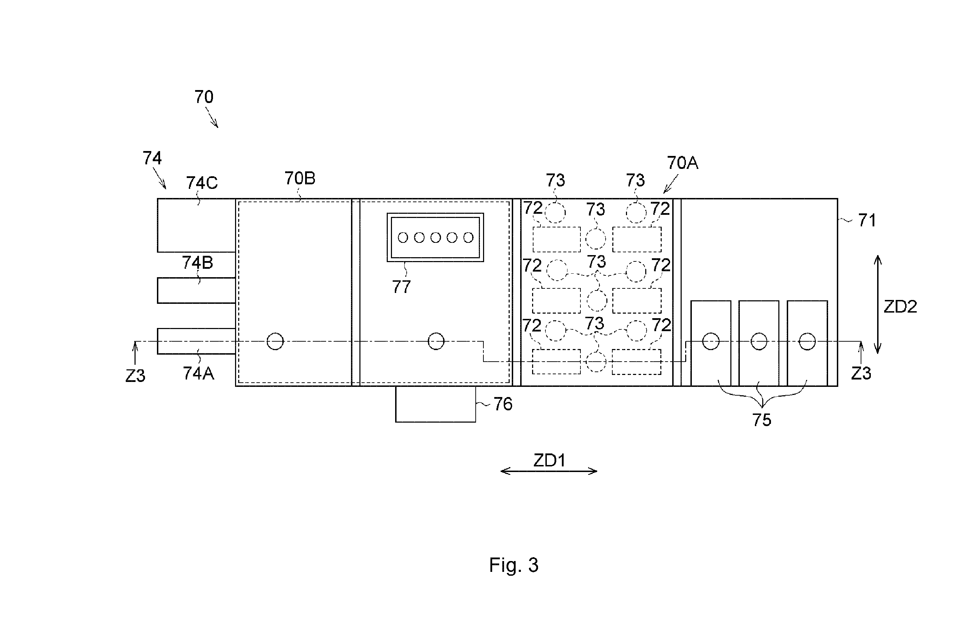

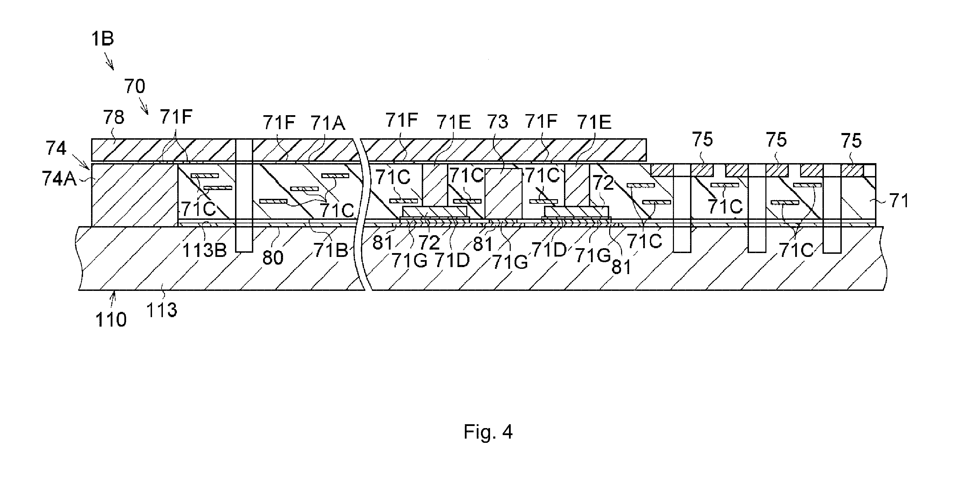

With reference to FIGS. 3 and 4, the detailed structure of the circuit board 70 will be described. The longitudinal directions of the circuit board 70 shown by arrows ZD1 in FIG. 3 will be referred to as "transverse directions ZD1". Furthermore, the lateral directions of the circuit board 70 shown by arrows ZD2 in FIG. 3 will be referred to as "vertical directions ZD2".

As shown in FIG. 3, the circuit board 70 includes, in addition to the circuit board main body 71, the three bus bar connection terminals 75 and the resin cover portion 78 (see FIG. 1), field effect transistors as six power elements 72, nine load bearing members 73, three control elements 74, one resolver connector 76, one external connector 77 and a ceramic portion 80 (see FIG. 4.). In the circuit board 70, the six power elements 72 constitute an inverter circuit 70A, and circuit elements such as the control elements 74 constitute a control circuit 70B that controls operations of the power elements 72. Note that, the bus bar connection terminals 75 may function as "connection terminal".

The circuit board main body 71 is formed in a flat plate shape in a developed state. As shown in FIG. 4, the circuit board main body 71 has a main surface 71A, a back surface 71B, conductor patterns 71C, electroconductive portions 71D, inter-layer connection portions 71E, main surface metal junction portions 71F, and back surface metal junction portions 71G. The circuit board main body 71 is formed as a multi-layer printed board formed by performing thermocompression bonding on stacked thermoplastic resin films on each of which the conductor patterns 71C are formed. The circuit board main body 71 has a structure in which the bus bar connection terminals 75, the resolver connector 76 (see FIG. 3) and the external connector 77 (see FIG. 3) are fitted to the main surface 71A. The circuit board main body 71 is fixed to the ceramic portion 80, at the back surface 71B, which is formed on the opposite side of the circuit board main body 71 from the main surface 71A.

The conductor patterns 71C electrically connect circuit elements attached to the circuit board main body 71, such as the power elements 72. The conductor patterns 71C are formed on each layer of the circuit board main body 71. The electroconductive portions 71D are located at portions within the circuit board main body 71, which correspond to the power elements 72. The electroconductive portions 71D are located between the power elements 72 and the back surface 71B.

Each inter-layer connection portion 71E is formed of a via hole and electroconductive paste that fills the via hole. The inter-layer connection portions 71E electrically connect the conductor patterns 71C of the layers of the circuit board main body 71.

The main surface metal junction portions 71F are formed on the main surface 71A of the circuit board main body 71. The main surface metal junction portions 71F are electrically connected to the bus bar connection terminals 75, connection terminals 76A (see FIG. 2A) of the resolver connector 76, and the control elements 74.

The back surface metal junction portions 71G are formed on the back surface 71B of the circuit board main body 71. The back surface metal junction portions 71G are located at portions of the circuit board main body 71, which correspond to the electroconductive portions 71D and the load bearing members 73. The back surface metal junction portions 71G contact the electroconductive portions 71D and the load bearing members 73.

The power elements 72 are located within the circuit board main body 71, at positions on the back surface 71B side. The power elements 72 are electrically connected to the electroconductive portions 71D. The load bearing members 73 are made of a metal material. The load bearing members 73 have a columnar shape. The load bearing members 73 are located around each of the power elements 72 within the circuit board main body 71. One end of each load bearing member 73 is located at a position that is within the circuit board main body 71 and that is at the back surface 71B-side end portion of the circuit board main body 71. The other end of each load bearing member 73 is located at a position that is within the circuit board main body 71 and that is closer to the main surface 71A than the power elements 72.

The control elements 74 are adjacent to a side surface that is perpendicular to the main surface 71A and the back surface 71B of the circuit board main body 71. The control elements 74 are arranged in the vertical directions ZD2 (see FIG. 3). The control elements 74 include a film capacitor 74A, a toroidal coil 74B, and a relay 74C (which are shown in FIG. 3). The film capacitor 74A, the toroidal coil 74B and the relay 74C are electrically connected to the main surface metal junction portion 71F of the circuit board main body 71 by wire bonding.

The bus bar connection terminals 75 arranged at equal intervals in the transverse directions ZD1. The bus bar connection terminals 75 are located at the main surface 71A side of the circuit board main body 71. The bus bar connection terminals 75 extend in the vertical directions ZD2 (see FIG. 3).

The resolver connector 76 has the connection terminals 76A and a connector case 76B (which are shown in FIG. 2A). The connection terminals 76A have a cylindrical shape so that the connection terminals 53A of the circuit connection member 53 of the resolver 50 are fitted to the connection terminals 76A. The connector case 76B has a rectangular shape of which the long sides extend in the transverse directions ZD1 in a plan view, and has a box shape so as to house the connection terminals 76A (see FIG. 2A).

The external connector 77 connects an external power supply (not shown) and the circuit board main body 71 to each other. The external connector 77 is protruded from the side wall 61 of the motor bracket 60 in the radially outward directions ZB2 (see FIG. 2B).

The resin cover portion 78 is made of a resin material that is electrically insulative. The resin cover portion 78 covers portions of the main surface 71A of the circuit board main body 71 other than the bus bar connection terminals 75 and also covers the control elements 74. The resin cover portion 78 covers circuit elements (not shown) attached to the main surface 71A of the circuit board main body 71. The resin cover portion 78 restrains electrical conduction between the main surface metal junction portions 71F and circuit elements (not shown) joined to the main surface metal junction portions 71F by wire bonding, from becoming unstable due to changes in the ambient temperature of the circuit board 70. The resin cover portion 78 covers the circuit board main body 71 to restrain adhesion of dust and water droplets onto the circuit board main body 71.

The ceramic portion 80 is made of alumina. The ceramic portion 80 constitutes a thin film that is formed on the outer face 113B of the side wall 113 of the gear housing 110. The ceramic portion 80 has electroconductive portions 81 at positions that correspond to the back surface metal junction portions 71G. The electroconductive portions 81 contact the back surface metal junction portions 71 G and the side wall 113.

With reference to FIG. 1 and FIG. 4, a production method for the motor unit 1 will be described. The production method for the motor unit 1 includes a circuit board-bending step, a resin molding step, a ceramic formation step, a board junction step, and a housing fixation step.

In the circuit board-bending step, a worker bends a circuit board without the resin cover portion 78 (hereinafter, referred to as "pre-mold board") into a shape that conforms to the outer face 113B of the side wall 113 of the gear housing 110.

In the resin molding step, the worker forms the resin cover portion 78 through the resin molding of the main surface 71A side of the pre-mold board that has been bent in the circuit board-bending step.

In the ceramic formation step, the worker forms the ceramic portion 80 on the outer face 113B of the side wall 113 by an aerosol deposition method. In the board junction step, the worker pressurizes the circuit board 70 and the side wall 113 of the gear housing 110 while heating them through the use of a vacuum hot press machine. As a result, the back surface metal junction portions 71G and the electroconductive portions 81 of the ceramic portion 80 are joined to each other. That is, the circuit board 70 is joined to the ceramic portion 80.

In the housing fixation step, the worker press-fits the worm shaft 90 to the output shaft 11 to which the coupling 120 has been connected, and also inserts the side wall 113 of the gear housing 110 into the space defined by the side wall 61 of the motor bracket 60. At this time, the worker fits the circuit connection member 53 of the resolver 50 to the resolver connector 76. Then, the worker fixes the U-phase copper plate 31U, the V-phase copper plate 31V, and the W-phase copper plate 31W, and the bus bar connection terminals 75 to each other with the bolts 79, and fixes the gear housing 110 to the motor bracket 60 with the bolts 66. The worker controls the tightening of the bolts 79 such that the tightening torque for the bolts 79 is within a preset range, whereby the state of junction between the U-phase copper plate 31U, the V-phase copper plate 31V, and the W-phase copper plate 31W, and the bus bar connection terminals 75 is controlled.

The operation of the motor unit 1 will be described with reference to FIG. 2B. The outer face 113B of the side wall 113 of the gear housing 110 is located inward of the inner peripheral face of the motor housing 40 in the radially inward directions ZB1. The circuit board 70 is wrapped on the outer face 113B of the side wall 113 of the gear housing 110. At this time, the circuit board 70 is arranged so as to extend in the axial directions ZA, so that the thickness direction of the circuit board main body 71 is in parallel to the radial directions ZB. Then, as the circuit board main body 71 of the circuit board 70 is bent, the circuit board main body 71 is reduced in size in the radial directions ZB. Therefore, the circuit board 70 is located inward of the side wall 61 of the motor bracket 60 in the radially inward directions ZB1, and is located inward of the outer peripheral face 40A of the motor housing 40 in the radially inward directions ZB1. As a result, the size of the circuit board 70 in the radial directions ZB is made smaller than that in a structure in which the circuit board 70 is disposed such that the main surface 71A and the back surface 71B of the circuit board main body 71 extend in parallel to the radial directions ZB in a state in which the circuit board main body 71 has been developed as shown in FIG. 3. Therefore, the motor bracket 60 is reduced in size in the radial directions ZB.

Furthermore, the control device 1B has a first function and a second function. The first function refers to a function of suppressing an increase in the temperature of the power elements 72. The second function refers to a function of suppressing application of excess load to the power elements 72.

The first function of the control device 1B will be described with reference to FIG. 4. When the motor unit 1 is driven, the power elements 72 produce heat. Heat of the power elements 72 is transferred to the electroconductive portions 81 of the ceramic portion 80 via the electroconductive portions 71D and the back surface metal junction portions 71G. The heat that has reached the electroconductive portions 81 is further transferred to the side wall 113 of the gear housing 110. Therefore, the heat of the power elements 72 is transferred to the gear housing 110. Hence, an increase in the temperature of the power elements 72 is suppressed.

The second function of the control device 1B will be described with reference to FIG. 4. The load bearing members 73 are located around each power element 72 within the circuit board main body 71. Therefore, in the board junction step, when the circuit board 70 is pressurized toward the ceramic portion 80 by the vacuum hot press machine, the load applied to the circuit board main body 71 is borne by the load bearing members 73, at the positions around the power elements 72. Therefore, the load applied to the circuit board main body 71 is restrained from acting on the power elements 72.

The motor unit 1 of the embodiment produces the following effects. (1) The motor unit 1 has a structure in which the circuit board 70 is wrapped on the side wall 113 of the gear housing 110. With this structure, the size of the circuit board 70 in the radial directions ZB is made smaller than that in the structure in which the circuit board 70 is fixed to the bottom wall 62 of the motor bracket 60.

(2) The motor unit 1 has a structure in which the first fitting portion 62C of the motor bracket 60 and the second fitting portion 113A of the gear housing 110 are fitted to each other. With this structure, the relative positional relationship between the motor bracket 60 and the gear housing 110 is determined. Furthermore, because the inner face of the first fitting portion 62C has a hexagonal shape in a plan view and the outer face of the second fitting portion 113A has a hexagonal shape in a bottom view, relative rotation between the gear housing 110 and the motor bracket 60 is restricted.

(3) In the motor unit 1, the U-phase copper plate 31U, the V-phase copper plate 31V, and the W-phase copper plate 31W of the bus bar 30, and the bus bar connection terminals 75 are fixed to each other with the bolts 79. This structure achieves higher reliability of electrical connection between the U-phase copper plate 31U, the V-phase copper plate 31V, and the W-phase copper plate 31W, and the bus bar connection terminals 75 than that in a structure in which the U-phase copper plate 31U, the V-phase copper plate 31V, and the W-phase copper plate 31W, and the bus bar connection terminals 75 only contact each other. Furthermore, by controlling the tightening torque for the bolts 79, the state of junction between the U-phase copper plate 31U, the V-phase copper plate 31V, and the W-phase copper plate 31W, and the bus bar connection terminals 75 is controlled.

(4) The circuit board 70 has the resin cover portion 78 that covers portions of the main surface 71A of the circuit board main body 71 other than the bus bar connection terminals 75. With this structure, dust and water droplets from outside the circuit board 70 are restrained from adhering to the circuit board main body 71. This improves the reliability of the circuit board 70.

(5) The circuit board 70 has a structure in which the load bearing members 73 are located around each of the power elements 72. With this structure, the load applied to the circuit board main body 71 in the board junction step is restrained from acting on the power elements 72.

(6) The circuit board 70 has a structure in which the electroconductive portions 81 of the ceramic portion 80 contact the back surface metal junction portions 71G of the circuit board main body 71. With this structure, the heat of the power elements 72 is transferred to the electroconductive portions 81 via the back surface metal junction portions 71G. Therefore, an increase in the temperature of the power elements 72 is suppressed.

(7) As the structure of a circuit board of a motor unit, the following structure (hereinafter, referred to as "comparative circuit structure") has been known. That is, the comparative circuit structure has a flat plate first circuit board that is fixed to the motor bracket and that has power elements 72, an electric power supply module in which control elements 74 and an external connector 77 are assembled together into a module, and a flat plate second circuit board that has a circuit element that controls the operation of the power elements 72. The electric power supply module is located above the first circuit board in the upward direction ZA1. The second circuit board is located above the electric power supply module in the upward direction ZA1. Therefore, the circuit board having the comparative circuit structure is large in the axial directions ZA.

In contrast, the circuit board 70 has a structure in which the power elements 72, the control elements 74 and the external connector 77 are attached to the circuit board main body 71. That is, the circuit board 70 corresponds to a structure in which the first circuit board, the electric power supply module and the second circuit board in the comparative circuit structure are integrated together. Therefore, the circuit board 70 is smaller in size than the circuit board in the comparative circuit structure.

(8) The circuit board 70 has a structure in which the control elements 74 are adjacent to the peripheral edge of the circuit board main body 71. With this structure, the size of the circuit board 70 in the thickness direction is made smaller than that in a structure in which the control elements 74 are attached onto the main surface 71A of the circuit board main body 71.

(9) The motor unit 1 has a structure in which the control elements 74 contact the side wall 113 of the gear housing 110. With this structure, the heat of the control elements 74 is transferred to the side wall 113. Therefore, an increase in the temperature of the control elements 74 is suppressed.

(10) The motor unit 1 has a structure in which the circuit board 70 is fixed to the gear housing 110. With this structure, because the gear housing 110 is farther from the stator 20 than the motor bracket 60 is, the circuit board 70 is less likely to be influenced by the heat of the stator 20. Moreover, the volume capacity of the gear housing 110 is larger than the volume capacity of the motor bracket 60. Therefore, the heat of the power elements 72 is easily transferred to the gear housing 110. Therefore, an increase in the temperature of the power elements 72 is suppressed.

The invention includes embodiments other than the foregoing embodiment. As other embodiments of the invention, modifications of the foregoing embodiment will be described. Note that, the following modifications may be combined with each other.

The gear housing 110 in the foregoing embodiment has the outer face 113B of the side wall 113, which is hexagonal in a bottom view. On the other hand, a gear housing 110 in a modification may have an outer face 113B of the side wall 113, which has a polygonal shape other than a hexagonal shape or has a circular shape. The circuit board 70 in the modification is wrapped on the side wall 113 so as to conform to the shape of the outer face 113B of the side wall 113.

The circuit board 70 in the foregoing embodiment has the resin cover portion 78. On the other hand, a circuit board 70 in a modification may be configured without the resin cover portion 78.

The circuit board 70 in the foregoing embodiment has the columnar load bearing members 73. On the other hand, a circuit board 70 in a modification may have load bearing members 73 of which the shape is a polygonal prism such as a quadrangular prism.

The circuit board 70 in the foregoing embodiment has the load bearing members 73 that are made of metal. On the other hand, a circuit board 70 in a modification may have load bearing members 73 that are made of resin.

The circuit board 70 in the foregoing embodiment has a structure in which the load bearing members 73 are disposed around the power elements 72. On the other hand, a circuit board 70 in a modification may have a structure in which the load bearing members 73 are disposed around circuit elements other than the power elements 72, within the circuit board main body 71.

The circuit board 70 in the foregoing embodiment has a structure in which the ceramic portion 80 is provided with the electroconductive portions 81. On the other hand, a circuit board 70 in a modification may have a structure in which the electroconductive portions 81 are omitted from the ceramic portion 80.

The circuit board 70 in the foregoing embodiment has the inverter circuit formed of the power elements 72, and a control circuit that controls the operation of the power elements 72. On the other hand, a circuit board 70 in a modification may have a first circuit board that has an inverter circuit formed of the power elements 72, and a second circuit board that has a control circuit that controls the operation of the power elements 72. The first circuit board and the second circuit board are separately formed. The first circuit board is fixed to the outer face 113B of the side wall 113 of the gear housing 110. The second circuit board is fixed to a portion of the outer face 113B of the side wall 113, which is different from the portion thereof to which the first circuit board is attached.

In the circuit board 70 in the foregoing embodiment, the entire circuit board main body 71 is joined to the ceramic portion 80. On the other hand, in a circuit board 70 in a modification, a portion of the circuit board main body 71 where the power elements 72 are located may be joined to the ceramic portion 80. Portions of the circuit board main body 71, which are other than the portions where the power elements 72 are located, are fixed to the side wall 113 of the gear housing 110, for example, by an adhesive agent.

The circuit board 70 in the foregoing embodiment has the ceramic portion 80 that is made of alumina. On the other hand, a circuit board 70 in a modification may have a ceramic portion 80 that is made of aluminum nitride, silicon nitride, or a composite formed of at least two of alumina, aluminum nitride and silicon nitride.

The circuit board 70 in the foregoing embodiment has the ceramic portion 80 that has been formed by aerosol deposition. On the other hand, a circuit board 70 in a modification may have a ceramic portion 80 that has been formed by any one of thermal spraying, chemical vapor deposition (CVD) and sputtering.

The circuit board 70 in the foregoing embodiment has the ceramic portion 80. On the other hand, a circuit board 70 in a modification may be configured without the ceramic portion 80.

The circuit board 70 in the foregoing embodiment has the circuit board main body 71 that is formed as a multi-layer printed board in which multiple thermoplastic resin films have been stacked. On the other hand, the circuit board 70 in a modification may have a circuit board main body 71 that is formed as a printed board of which the base material is a thermosetting resin. The circuit board main body 71 in the modification is formed of four board main body portions. The circuit board main body 71 is fixed to respective surfaces of the outer face 113B of the side wall 113 of the gear housing 110. The adjacent board main body portions are connected to each other by, for example, a flexible board.

The motor unit 1 in the foregoing embodiment has the first fitting portion 62C of the motor bracket 60 and the second fitting portion 113A of the gear housing 110. On the other hand, the motor unit 1 in a modification may be configured without the second fitting portion 113A and the first fitting portion 62C.

The motor unit 1 in the foregoing embodiment has a structure in which the U-phase copper plate 31U, the V-phase copper plate 31V and the W-phase copper plate 31W of the bus bar 30 and the bus bar connection terminals 75 are joined to each other with the bolts 79. On the other hand, in a motor unit 1 in a modification, the U-phase copper plate 31U, the V-phase copper plate 31V and the W-phase copper plate 31W, and the bus bar connection terminals 75 may be joined to each other by welding.

The motor unit 1 in the foregoing embodiment has a structure in which, in a bottom view of the side wall 113 of the gear housing 110, the U-phase copper plate 31U, the V-phase copper plate 31V and the W-phase copper plate 31W and the bus bar connection terminals 75 are located on one of the sides of the hexagonal outer face 113B. On the other hand, a motor unit 1 in a modification may have a structure in which the U-phase copper plate 31U, the V-phase copper plate 31V and the W-phase copper plate 31W and bus bar connection terminals 75 are located over at least two of the sides of the hexagonal outer face 113B.

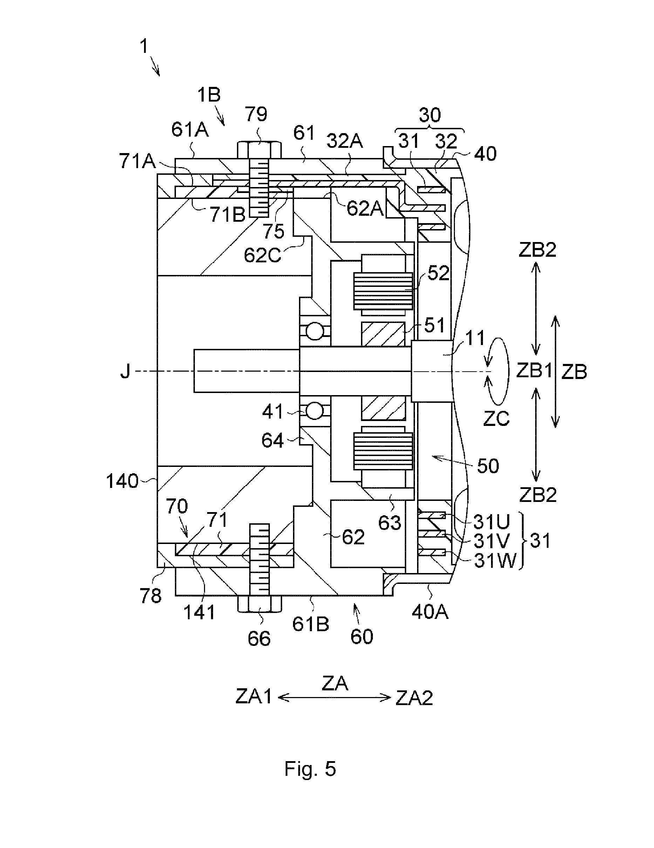

The motor unit 1 in the foregoing embodiment has a structure in which the circuit board 70 is wrapped on the side wall 113 of the gear housing 110. On the other hand, the motor unit 1 in a modification, as shown in FIG. 5, may have a structure in which the circuit board 70 is wrapped on an outer face 141 of a board support member 140 that has been formed separately from the gear housing 110. The motor unit 1 in the modification has a structure in which, instead of the speed reducer 1C, the board support member 140 is fixed to the motor bracket 60. The outer face 141 of the board support member 140 has a hexagonal shape in a plan view.

In the motor unit 1 in the foregoing embodiment, the side wall 113 of the gear housing 110 is located inward of the outer peripheral face 40A of the motor housing 40 and the outer peripheral face 61B of the side wall 61 of the motor bracket 60 in the radially inward directions ZB1. On the other hand, in the motor unit 1 in a modification, the side wall 113 of the gear housing 110 may be located inward of the outer peripheral face 61B of the side wall 61 of the motor bracket 60 in the radially inward directions ZB1, and outward of the outer peripheral face 40A of the motor housing 40 in the radially outward directions ZB2. In the motor unit 1 in the modification, the inner face of the side wall 61 of the motor bracket 60 is located outward of the outer peripheral face 40A of the motor housing 40 in the radially outward directions ZB2.

The motor unit 1 in the foregoing embodiment has a structure in which the gear housing 110 is fixed to the motor bracket 60. On the other hand, the motor unit 1 in a modification may have a structure in which the gear housing 110 is fixed to the motor housing 40. Specifically, the motor housing 40 extends upwardly of the motor bracket 60 in the upward direction ZA1. The outer face of the gear housing 110 is fitted to the inner face of the motor housing 40. The gear housing 110 is fixed to the motor housing 40 with the two bolts 66.

In the motor unit 1 in the foregoing modification, the side wall 113 of the gear housing 110 may be located outward of the outer peripheral face 61B of the side wall 61 of the motor bracket 60 in the radially outward directions ZB2, and inward of the outer peripheral face 40A of the motor housing 40 in the radially inward directions ZB1.

## Claims

1. A motor unit, comprising:
an electric motor having a motor housing that houses a rotor and a stator, and a motor bracket that is fixed to an end portion of the motor housing in an axial direction of the rotor;
a board support member located on an opposite side of the motor bracket from the motor housing in the axial direction; and
a circuit board that controls driving of the electric motor, and that is wrapped on an outer face of the board support member.

2. The motor unit according to claim 1, wherein:
the board support member has a side wall that is located radially inward of at least one of an outer peripheral face of the motor housing and an outer peripheral face of the motor bracket; and
the circuit board is wrapped on the side wall of the board support member.

3. The motor unit according to claim 1 or 2, wherein:
the motor bracket has a first fitting portion;
the board support member has a second fitting portion; and
the first fitting portion and the second fitting portion are fitted to each other.

4. The motor unit according to any one of claims 1 to 3, wherein:
the electric motor has a bus bar that electrically connects the stator and the circuit board to each other;
the circuit board has a connection terminal that is connected to an end portion of the bus bar; and
the connection terminal and the end portion of the bus bar are fixed to each other with a bolt.

5. The motor unit according to claim 4, wherein the circuit board has a circuit board main body to which the connection terminal has been attached, and a resin cover portion that is made of an electrically insulating resin material, and that covers a portion of the circuit board main body other than the connection terminal.

6. The motor unit according to any one of claims 1 to 5, wherein the motor unit has the circuit board as a multi-layer printed board formed of thermoplastic resin films.
